# EUROPÄISCHE PATENTSCHRIFT

(11) **EP 2 539 250 B1**
(45) Veröffentlichungstag und Bekanntmachung des Hinweises auf die Patenterteilung: **03.05.2017**
(21) Anmeldenummer: 11705450.2
(22) Anmeldetag: 15.02.2011
(51) Int. Cl.: B65G 13/06, H04Q 9/00

(54) **ROLLENANTRIEB UND VERFAHREN ZUM STEUERN EINER ANLAGE**
ROLLER DRIVE AND METHOD FOR CONTROLLING A SYSTEM
SYSTÈME D'ENTRAÎNEMENT DE ROULEAU ET PROCÉDÉ DE COMMANDE D'UNE INSTALLATION

(30) Priorität: 23.02.2010 DE 102010009072
(43) Veröffentlichungstag der Anmeldung: 02.01.2013
(73) Patentinhaber: Sew-Eurodrive GmbH & Co. KG, 76646 Bruchsal (DE)
(72) Erfinder: SCHMIDT, Josef, 76676 Graben-Neudorf (DE); PHILIPP, Torsten, 76646 Bruchsal (DE)
(74) Vertreter: Tüngler, Eberhard
(86) Internationale Anmeldenummer: PCT/EP2011/000700
(87) Internationale Veröffentlichungsnummer: WO 2011/103975

(56) Entgegenhaltungen:
- WO-A1-2005/064763
- WO-A1-2009/047282
- DE-A1- 10 131 019
- DE-A1-102007 050 266
- US-B1- 6 244 427

## Beschreibung

Die Erfindung betrifft einen Rollenantrieb und ein Verfahren zum Steuern einer Anlage.

Es ist bekannt, Rollen mittels eines Elektromotors anzutreiben.

Aus der DE 10 2007 050266A1 ist ein System bekannt, bei dem einem Verbraucher gleichzeitig Energie aus einen Energiespeicher und aus Versorgungsleitungen zuführbar ist.

Aus der WO 20051064763 A1 ist eine induktive Versorgung eines elektrischen Verbrauchers bekannt.

Aus der DE 101 31 019 A1 ist eine Messrolle und Erfassungsrolle bekannt.

Aus der US 6 244 427 B1 ist ein modular aufgebauter getriebeloser motorisierter Rollenförderer bekannt.

Der Erfindung liegt daher die Aufgabe zugrunde, einen Rollenantrieb weiterzubilden, der eine möglichst effektiven Last-Förderung ermöglicht.

Erfindungsgemäß wird die Aufgabe bei dem Rollenantrieb nach den in Anspruch 1 und bei dem Verfahren zum Steuern einer Anlage nach den in Anspruch 10 angegebenen Merkmalen gelöst.

Wichtige Merkmale der Erfindung bei dem Rollenantrieb, umfassend eine an einem Rollenträger drehbar gelagerte Rolle, sind, dass ein die Rolle antreibender Elektromotor von der Rolle zumindest teilweise gehäusebildend umgeben ist,
wobei am Rollenantrieb zumindest ein Sensor angeordnet ist,
wobei Energie und/oder Daten zwischen Rollenantrieb und Rolle oder einem mit der Rolle mitdrehbaren Teil berührungslos übertragbar ist.

Von Vorteil ist dabei, dass eine intelligente und somit effiziente Steuerung des Rollenantriebs ermöglicht ist. Außerdem ist nicht nur der Sensor sondern auch der Elektromotor in der Rolle integriert und somit eine kompakte Einheit geschaffen, die einen intelligenten und bezüglich einer Größe, wie Energieverbrauch, logistische Leistung oder dergleichen, optimierbar ist.

Insbesondere ist das Eintreffen einer Last, also eines Transportgutes detektierbar und dann der Rollenantrieb elektrisch versorgbar. Solange also keine Last detektiert ist, ist ein Standby ausführbar, der die Energiekosten senkt.

Des Weiteren sind Informationen über die Beschaffenheit der Last oder andere auf die Last bezogene Größen erfassbar und bei der Steuerung der Anlage berücksichtigbar.

Bei einer vorteilhaften Ausgestaltung werden einer elektronischen Schaltung die Sensorsignale des Sensors zugeleitet zur Bestimmung
- des Eintreffens der Last,
- der Masse der Last,
- der Geschwindigkeit der Last
- einer Identifikationsinformation der Last
- der Breite der Last,
- der Länge der Last,
- der Ausrichtung der Last zur Rollenachse,
- und/oder einer Materialeigenschaft der Last, wie einer optischen, elektrischen und/oder magnetischen Eigenschaft.

Von Vorteil ist dabei, dass eine oder mehrere Größen bestimmbar sind und bei der Steuerung der Anlage berücksichtigbar.

Bei einer vorteilhaften Ausgestaltung ist die elektronische Schaltung mit der Rolle mitdrehbar angeordnet. Von Vorteil ist dabei, dass die Rolle gehäusebildende Funktion übernimmt und somit die Schaltung geschützt angeordnet ist. Außerdem ist eine Sensorsignalverarbeitung schon direkt in der Rolle ausführbar und die bestimmten Daten dann übertragbar an den stationären Teil der Anlage.

Bei einer vorteilhaften Ausgestaltung ist der Stator oder der Rotor des Elektromotors mit der Rolle mitdrehbar angeordnet, insbesondere wobei eine Erregerwicklung mit der Rolle mitdrehbar angeordnet ist. Von Vorteil ist dabei, dass ein direkter Rollenantrieb realisierbar ist.

Bei der Erfindung sind Energie und/oder Daten induktiv übertragbar, wobei eine Sekundärwicklung mit der Rolle mitdrehbar angeordnet ist, die mit einer im Rollenträger vorgesehenen Primärwicklung induktiv gekoppelt angeordnet ist oder mit einer am Rollenträger angeordneten Primärleitung induktiv gekoppelt angeordnet ist. Von Vorteil ist dabei, dass Energie und /oder Daten berührungslos übertragbar sind und somit die Sicherheit mittels galvanischer Trennung von der elektrischen Versorgung zur Last hin erhöhbar ist.

Bei einer vorteilhaften Ausgestaltung ist der Sensor innerhalb der Rolle angeordnet,
- in das Rollenlager integriert angeordnet ist,
- in der Oberfläche der Rolle angeordnet ist,
- in einem Lagerschild des Rollenantriebs angeordnet ist.

Von Vorteil ist dabei, dass eine möglichst kompakte Anordnung geschaffen ist.

Bei einer vorteilhaften Ausgestaltung ist die elektronische Schaltung induktiv aus einer Wicklung des Elektromotors versorgt. Von Vorteil ist dabei, dass eine galvanische Trennung realisierbar ist, ohne dass ein zusätzlicher DC/AC Wandler oder dergleichen notwendig ist. Denn es werden die sowieso für den Elektromotor vorhandenen Wechselströme und Wechselfelder für die induktive Versorgung mitgenutzt.

Bei einer vorteilhaften Ausgestaltung sind Daten oder die Sensorsignale aufmodulierbar auf die Versorgungsspannung für den Elektromotor und somit induktiv übertragbar sind von der Sekundärwicklung zur Primärwicklung. Von Vorteil ist dabei, dass keine zusätzlichen Mittel zur Datenübertragung notwendig sind und dass die Störsicherheit sehr hoch ist.

Bei einer vorteilhaften Ausgestaltung werden Daten oder die Sensorsignale berührungslos als Funksignale oder als Infrarotsignale übertragen. Von Vorteil ist dabei, dass die Datenübertragungsrate sehr hoch wählbar ist.

Bei einer vorteilhaften Ausgestaltung werden die Daten des Sensors oder der Sensoren zu einer elektronischen Schaltung des Rollenantriebs geleitet, die zum Datenaustausch mit einer übergeordneten Steuerung verbunden ist. Von Vorteil ist dabei, dass die Daten von der übergeordneten Steuerung zur Steuerung der gesamten Anlage verwendbar ist.

Wichtige Merkmale bei dem Verfahren zum Steuern einer Anlage, welche mindestens einen vorbeschriebenen Rollenantrieb aufweist,

insbesondere wobei die Anlage eine Rollenbahn umfasst, die eine Vielzahl von Rollen aufweist, wobei eine der Rollen von einem Rollenantrieb nach mindestens einem der vorangegangenen Ansprüche umfasst ist,
wobei die von einem Sensor oder den Sensoren des Rollenantriebs erfassten Informationen einer übergeordneten Steuerung der Anlage zugeleitet werden, so dass aus dem zeitlichen Verlauf der mittels des Sensors oder der Sensoren erfassten Werte einer Zustandsgröße der Anlage bestimmbar sind.

Von Vorteil ist dabei, dass eine effiziente Steuerung der Anlage, insbesondere energieoptimiert und logistisch optimiert, ausführbar ist.

Bei einer vorteilhaften Ausgestaltung ist die Zustandsgröße eine physikalische Größe der mit dem Rollenantrieb zu fördernden Last. Von Vorteil ist dabei, dass die Steuerung der Anlage optimierbar ist, indem die erfassten Daten der übergeordneten Steuerung zuführbar ist.

Bei einer vorteilhaften Ausgestaltung bezieht sich die Zustandsgröße auf
- das Vorhandensein von Gütern auf der die Rolle umfassenden Rollenbahn,
- die Anzahl von transportierten Lasten innerhalb der mehrere erfindungsgemäß ausgeführter Rollenantriebe Anlage,
- die Gewichtsbeladung des die Rolle umfassenden Rollenbahnabschnitts,
- den Abstand von Gütern auf der Rollenbahn,
- die Drehgeschwindigkeit der Rolle und/oder
- das Antriebsmoment und/oder Bremsmoment der Rolle.
Von Vorteil ist dabei, dass wiederum die Steuerung der Anlage optimierbar ist, indem die erfassten Daten der übergeordneten Steuerung zuführbar ist.

Bei einer vorteilhaften Ausgestaltung wird aus dem Verlauf der Signale des Kraftsensors und der Drehgeschwindigkeit der Rolle auf die Länge der geförderten Last geschlossen. Von Vorteil ist dabei, dass die Steuerung der Anlage optimierbar ist, indem auch solche Informationen der übergeordneten Steuerung zuführbar ist.

Wichtige Merkmale bei dem Verfahren zum Steuern einer Anlage, welche mindestens einen Rollenantrieb nach mindestens einem der vorangegangenen Ansprüche aufweist,

insbesondere wobei die Anlage eine Rollenbahn umfasst, die eine Vielzahl von Rollen aufweist, wobei eine der Rollen von einem Rollenantrieb nach mindestens einem der vorangegangenen Ansprüche umfasst ist,
wobei die von einem Sensor oder den Sensoren des Rollenantriebs erfassten der jeweiigen Last zugeordneten Informationen, insbesondere die mittels eines an der Last angeordneten RFID erfassten Informationen, einer übergeordneten Steuerung der Anlage zugeleitet werden,
so dass Betriebsdauer, Winkelposition Antriebsmoment und/oder Drehzahl des Rollenantriebs abhängig von der erfassten Information gesteuert, auf ihren jeweiligen Sollwert oder zeitlichen Sollwerteverlauf geregelt werden oder eingeregelt werden.

Von Vorteil ist dabei, dass mit einem RFID Tag jeder Last individuell Informationen zuordenbar sind und somit nach Ablesen durch den in der Rolle oder im Rollenantrieb vorgesehenen Sensor die Bewegungsparameter entsprechend wählbar sind. Die Bewegungsparameter definieren beispielsweise auch eine Beschleunigungsrampe, also die Anstiegsdauer, die Dauer und die Dauer des Abfalls des Beschleunigungsverlaufs sowie die Werte und Veränderungsgeschwindigkeit der Werte des Beschleunigungsverlaufs. Eine unempfindliche Transportlast wird also schneller und unsanfter, also mit größerem Ruck, befördert als eine empfindlichere. Eine schwerere Last wird mit einem höheren Antriebsmoment angetrieben als eine leichtere.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

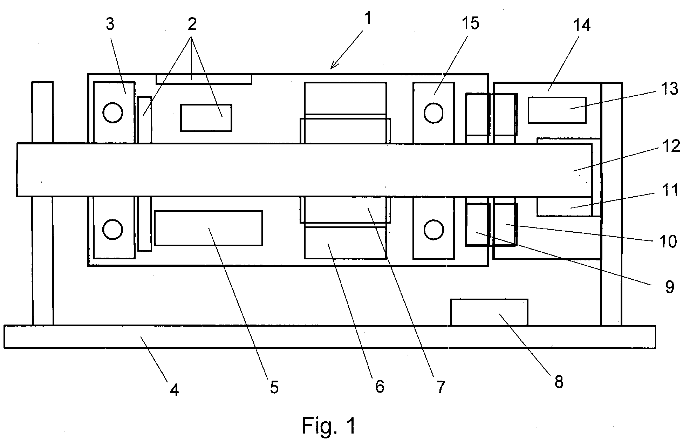

In der Figur 1 ist das Prinzip der Erfindung schematisch im Querschnitt skizziert.
In der Figur 2 ist eine zugehörige Draufsicht gezeigt.

Dabei ist eine Rolle 1 drehbar gelagert mittels Lagern (3, 15), die abgestützt sind durch eine an einem Rollenträger 4 fest verbundene Rollenachse 12.

Mittels der Rolle 1 ist eine Last, also ein Transportgut, senkrecht zur Rollenachse förderbar.

An der Innenseite der Rolle 1 ist ein Stator 6 mitdrehbar angeordnet, so dass ein an der Rollenachse 12 angeordneter Rotor vorgesehen ist. Dabei ist der Stator als Drehstromwicklung ausführbar und der Rotor mit Dauermagneten oder mit einer Erregerwicklung, wodurch ein Synchronmotorantrieb herstellbar ist.

Bei einem anderen erfindungsgemäßen Ausführungsbeispiel ist der Rotor als Außenläufer ausgeführt und der Stator an der Rotorachse angeordnet.

Bei einem anderen erfindungsgemäßen Ausführungsbeispiel wird der Rotor als Kurzschlusskäfig ausgeführt, so dass ein Asynchronmotorantrieb realisierbar ist.

Bei einem anderen erfindungsgemäßen Ausführungsbeispiel sind Stator und Rotor nach Art eines Gleichstrommotors mit Bürsten oder bürstenlos ausgeführt oder nach Art eines Reluktanzmotors.

Mit der Rolle 1 ist auch eine Primärwicklung 9 verbunden und somit mitdrehbar. Axial gegenüberstehend ist eine Sekundärwicklung 10 angeordnet, die an einem mit dem Rollenträger 4 fest verbundenen Gehäuseteil 14 befestigt ist und von diesem gehäusebildend umgeben ist. Mittels des aus Primärwicklung 9 und Sekundärwicklung 10 gebildeten Transformators ist eine berührungslose Energieversorgung des Elektromotors ausführbar. Wenn also beispielsweise der Stator mitdrehbar an der Rolle 1 angeordnet ist, ist über den Transformator die Versorgung des Stators ausführbar. Wenn hingegen eine Erregerwicklung an der Rolle 1 mitdrehbar verbunden ist, ist diese versorgbar über den Transformator.

In der Rolle 1 sind auch Sensoren 2 angeordnet, mit denen Werte einer oder mehrerer physikalischen Größen bestimmbar sind. Die Signale der Sensoren 2 werden einer elektronischen Schaltung 5 zugeführt, die innerhalb der Rolle 1 angeordnet ist..

Als mittels eines Sensors 2 detektierbare Eigenschaften sind
- die Masse der Last,
- die Breite der Last,
- die Länge der Last,
- die Ausrichtung der Last zur Rollenachse,
- Materialeigenschaften der Last, wie optische, elektrische und/oder magnetische Eigenschaften
detektierbar.

Als optische Eigenschaften sind beispielsweise Farbe, Reflexionsfähigkeit, Absorptionsfähigkeit detektierbar Als elektrische Eigenschaft ist beispielsweise die elektrische Leitfähigkeit detektierbar.

Außerdem sind Identifikationsinformationen der Last abfragbar. Beispielsweise ist ein Barcode oder ein RFID auslesbar.

Zwischen Rollenachse 12 und Rollenträger 4 und/oder Gehäuseteil 14 ist ein Drucksensor 11 angeordnet, so dass die Belastung der Rolle bestimmbar ist. Insbesondere bei Eintreffen einer von der Rolle 1 geförderten Last ist eine entsprechende Erhöhung der Belastung detektierbar.

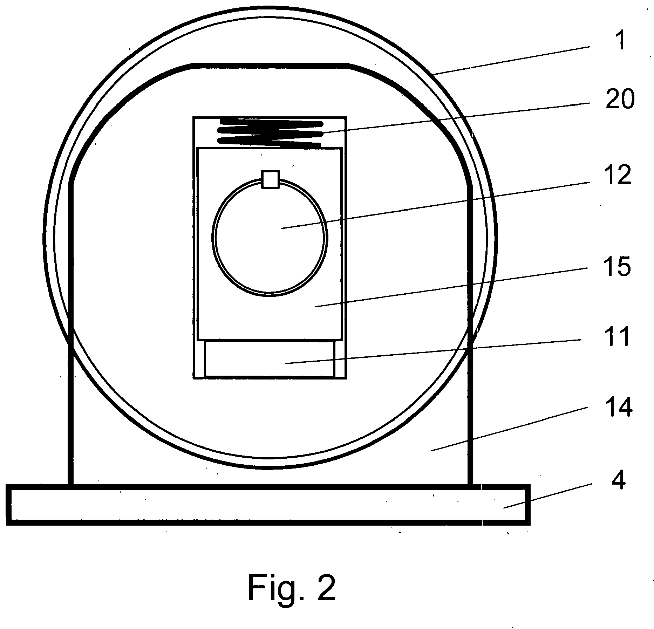

Wie in der Figur 2 gezeigt, ist die Rollenachse 12 in einem Lagerblock 15 eingepasst, der vertikal verschieblich im Gehäuse 14 oder Rollenträger 4 angeordnet ist. Dabei liegt der Lagerblock 15 auf einem Kraftsensor 11, insbesondere einem piezoelektrischen Kraftwandler, auf. Oben, also an der Rollenachse 12 dem Kraftsensor 11 gegenüberstehend, ist ein Federelement 20 angeordnet, so dass die Rollenachse 12 zwischen Kraftsensor 11 und Federelement 20 angeordnet ist und somit eine Entlastung des Kraftsensors erreichbar ist. Außerdem ist das Messergebnis und die Fixierung verbesserbar. Das elektrische Ausgangssignal des Kraftsensors 11 ist abhängig von der Auslenkung des Kraftsensors 11, so dass eine an der Rolle 1 eintreffende Last detektierbar ist und sogar die Masse bestimmbar ist.

Die mit dem Sensor detektierten Informationen sind beispielsweise verwendbar zum Beeinflussen, Steuern oder Regeln des Elektromotors, welcher die Rolle 1 antreibt. Dabei ist beispielsweise mit dem Sensor das Eintreffen einer von der Rolle 1 zu befördernden Last detektierbar und daraufhin der Elektromotor aktivierbar.

Die mit dem Sensor detektierten Informationen sind aber auch beispielsweise an eine übergeordnete Steuerung übertragbar, wodurch dieser Informationen zuführbar sind, wie beispielsweise das Eintreffen der Last, die Masse oder Geschwindigkeit der Last oder dergleichen. Wie oben erwähnt, ist auch ein Identifikationscode der Last mit dem Sensor 2 identifizierbar, so dass der Steuerung entsprechende Informationen zuleitbar sind.

Auf diese Weise sind der Steuerung Informationen zuführbar, die
- das Vorhandensein von Gütern auf der die Rolle 1 umfassenden Rollenbahn,
- die Anzahl von transportierten Lasten innerhalb der mehrere erfindungsgemäß ausgeführter Rollenantriebe Anlage,
- die Gewichtsbeladung des die Rolle 1 umfassenden Rollenbahnabschnitts,
- den Abstand von Gütern auf der Rollenbahn,
- die Drehgeschwindigkeit der Rolle und/oder
- das Antriebsmoment und/oder Bremsmoment der Rolle 1.

Einer oder mehrere Sensoren 2 sind innerhalb der Rolle 1 anordenbar, wobei sie im Lager 3 oder in der Rollenoberfläche der Rolle 1 oder im Rollenträger 4 integriert sind.

Die Energieversorgung der Sensoren 2 und der in der Rolle 1 angeordneten elektronischen Schaltung, welcher die Sensorsignale der Sensoren 2 zugeführt werden, erfolgt berührungslos über den Transformator, umfassend Primärwicklung 9 und Sekundärwicklung 10 . Alternativ ist im Rollenträger 4 ein Linientransformator 8 angeordnet zur Versorgung der Sensoren 2 samt zugehöriger elektronischer Schaltung 5 oder die Versorgung erfolgt transformatorisch aus der Erregerwicklung des Elektromotors .

Die durch die elektronische Schaltung 5 erhaltenen Signale werden zum stationären Teil berührungslos übertragen über den Transformator, umfassend Primärwicklung 9 und Sekundärwicklung 10 . Alternativ ist auch eine Funkübertragung an einen stationär am Rollenträger fest verbundenen Funkempfänger ausführbar oder eine Infrarotübertragung an einen stationär angeordneten Infrarotempfänger, welcher neben oder im Lagersitz des Lagers 3 oder 15 angeordnet ist.

Der im Rollenträger 4 oder im Gehäuseteil 14 angeordnete elektronische Schaltung 13 werden die übertragenen Informationen zugeführt. Außerdem werden dieser elektronischen Schaltung 13 Signale weiterer Sensoren zugeführt, so dass diese Informationen gemeinsam auswertbar sind und/oder übermittelbar an eine übergeordnete Steuerung.

Durch Bestimmen des Gewichts und/oder der Höhe der transportierten Last werden davon abhängige Betriebsparameter des Rollenantriebs einstellbar. Beispielsweise sind hier Drehmoment und/oder Drehzahl zu nenenn.

In einer ersten Variante wird die an der Rolle eintreffende Last, insbeosndere ein Paket oder dergleichen, positioniert, indem die Rolle auf eine Sollwinkelstellung hingeregelt wird.

In einer weiteren Varainte wird abhängig von den physikalischen Eigenschaften oder mittels RFID erkannten Identifikationsinformationen eine zu der individuellen eintreffnden Last zugehöriges Antriebsmoment erzeugt. Somit wird für schwere Pakete ein großes und für leichte Pakete ein kleines Antriebsmoment bereit gestellt.

In einer weiteren Varainte wird abhängig von der Empfindlichkeit des Transportguts eine entsprechende Geschwindigkeit der Rolle erzeugt und zum Antreiben bereit gestellt.

In den vorgenannten Varainten ist auch die Zeitdauer abhängig von der jeweiligen Last vorgebbar, während der der Rollenantrieb Antriebsmoment erzeugt. Somit ist die benötigte Energie sparsam verwendet und nur dann Antriebsenergie verbraucht, wenn diese auch nötig ist, also die Last in Kontakt mit der Rolle steht und diese antreibt.

### Bezugszeichenliste

- 1: Rolle
- 2: Sensoren
- 3: Lager
- 4: Rollenträger
- 5: elektronische Schaltung
- 6: Stator
- 7: Rotor
- 8: Linientransformator
- 9: Primärwicklung
- 10: Sekundärwicklung
- 11: Sensor
- 12: Rollenachse
- 13: elektronische Schaltung
- 14: Gehäuseteil
- 15: Lagerblock
- 20: Federelement

## Patentansprüche

1. **Rollenantriebssystem**, umfassend eine an einem Rollenträger (4) drehbar gelagerte Rolle (1). wobei ein die Rolle antreibender Elektromotor von der Rolle zumindest teilweise gehäusebildend umgeben ist,
**wobei** am Rollenantrieb zumindest ein Sensor (2) angeordnet ist, wobei Energie und/oder Daten zwischen Rollenträger und Rolle oder einem mit der Rolle mitdrehbaren Teil berührungslos übertragbar ist,
**dadurch gekennzeichnet, dass** Energie und/oder Daten induktiv übertragbar sind, indem eine den Elektromotor versorgende Sekundärwicklung (10) mit der Rolle mitdrehbar angeordnet ist, die mit einer im Rollenträger vorgesehenen Primärwicklung (9) induktiv gekoppelt angeordnet ist oder mit einer am Rollenträger angeordneten Primärleitung induktiv gekoppelt angeordnet ist.

2. **Rollenantriebssystem** nach mindestens einem der vorangegangenen Ansprüche,
**dadurch gekennzeichnet, dass**
einer elektronischen Schaltung die Sensorsignale des Sensors zugeleitet werden zur Bestimmung
- des Eintreffens der Last,
- der Masse oder des Gewichts der Last,
- der Geschwindigkeit der Last
- einer Identifikationsinformation der Last
- der Breite der Last,
- der Länge der Last,
- der Ausrichtung der Last zur Rollenachse,
- oder einer Materialeigenschaft der Last, wie einer optischen, elektrischen oder magnetischen Eigenschaft.

3. **Rollenantriebssystem** nach mindestens einem der vorangegangenen Ansprüche,
**dadurch gekennzeichnet, dass**
die elektronische Schaltung mit der Rolle mitdrehbar angeordnet ist.

4. **Rollenantriebssystem** nach mindestens einem der vorangegangenen Ansprüche,
**dadurch gekennzeichnet, dass**
der Stator oder der Rotor des Elektromotors mit der Rolle mitdrehbar angeordnet ist, insbesondere wobei eine Erregerwicklung mit der Rolle mitdrehbar angeordnet ist.

5. **Rollenantriebssystem** nach mindestens einem der vorangegangenen Ansprüche,
**dadurch gekennzeichnet, dass**
- der Sensor innerhalb der Rolle angeordnet ist,
- in das Rollenlager integriert angeordnet ist,
- in der Oberfläche der Rolle angeordnet ist,
- in einem Lagerschild des Rollenantriebs angeordnet ist.

6. **Rollenantriebssystem** nach mindestens einem der vorangegangenen Ansprüche, **dadurch gekennzeichnet, dass** die elektronische Schaltung induktiv aus einer Wicklung des Elektromotors versorgt ist.

7. **Rollenantriebssystem** nach mindestens einem der vorangegangenen Ansprüche, **dadurch gekennzeichnet, dass** Daten oder die Sensorsignale aufmödulierbar sind auf die Versorgungsspannung für den Elektromotor und somit induktiv übertragbar sind von der Sekundärwicklung zur Primärwicklung.

8. **Rollenantriebssystem** nach mindestens einem der vorangegangenen Ansprüche, **dadurch gekennzeichnet, dass** Daten oder die Sensorsignale berührungslos als Funksignale oder als Infrarotsignale übertragen werden

9. **Rollenantriebssystem** nach mindestens einem der vorangegangenen Ansprüche, **dadurch gekennzeichnet, dass** die Daten des Sensors oder der Sensoren zu einer elektronischen Schaltung des Rollenantriebs geleitet werden, die zum Datenaustausch mit einer übergeordneten Steuerung verbunden ist.

10. Verfahren zum Steuern einer Anlage, wobei die Anlage eine Rollenbahn umfasst, die eine Vielzahl von Rollen aufweist, wobei ein Rollenantriebssystem nach mindestens einem der vorangegangenen Ansprüche zumindest eine der Rollen umfasst,
**dadurch gekennzeichnet, dass** die von einem Sensor (2) oder den Sensoren des Rollenträgers erfassten Informationen einer übergeordneten Steuerung der Anlage zugeleitet werden, so dass aus dem zeitlichen Verlauf der mittels des Sensors oder der Sensoren erfassten Werte einer Zustandsgröße der Anlage bestimmbar sind,
wobei Energie und/oder Daten induktiv übertragen werden, wobei eine Sekundärwicklung (10) mit der Rolle mitdrehbar angeordnet ist, die mit einer im Rollenträger vorgesehenen Primärwicklung (9) induktiv gekoppelt angeordnet ist oder mit einer am Rollenträger angeordneten Primärleitung induktiv gekoppelt angeordnet ist, wobei die Zustandsgröße eine physikalische Größe der mit dem Rollenantrieb zu fördernden Last ist.

11. Verfahren nach Anspruch 10, **dadurch gekennzeichnet, dass** die Zustandsgröße sich bezieht auf
- das Vorhandensein von Gütern auf der die Rolle 1 umfassenden Rollenbahn,
- die Anzahl von transportierten Lasten innerhalb der mehrere erfindungsgemäß ausgeführter Rollenantriebe Anlage,
- die Gewichtsbeladung des die Rolle 1 umfassenden Rollenbahnabschnitts,
- den Abstand von Gütern auf der Rollenbahn,
- die Drehgeschwindigkeit der Rolle oder
- das Antriebsmoment oder Bremsmoment der Rolle 1.

12. Verfahren nach mindestens einem der Ansprüche 10 bis 11, **dadurch gekennzeichnet, dass** aus dem Verlauf der Signale des Kraftsensors und der Drehgeschwindigkeit der Rolle auf die Länge der geförderten Last geschlossen werden kann.

13. Verfahren zum Steuern einer Anlage, gemäss Anspruch 10, wobei die von einem Sensor oder den Sensoren des Rollenantriebssystems erfassten der jeweiigen Last zugeordneten Informationen, insbesondere die mittels eines an der Last angeordneten RFID erfassten Informationen, einer übergeordneten Steuerung der Anlage zugeleitet werden,
so dass Betriebsdauer, Winkelposition Antriebsmoment oder Drehzahl des Rollenantriebs abhängig von der erfassten Information gesteuert, auf ihren jeweiligen Sollwert oder zeitlichen Sollwerteverlauf geregelt werden oder eingeregelt werden.

## Claims

1. A roller drive system, comprising a roller (1) rotatably mounted on a roller support (4),
wherein an electric motor which drives the roller is surrounded by the roller at least partially in housing-forming manner,
wherein at least one sensor (2) is arranged on the roller drive,
wherein energy and/or data is/are able to be transmitted in contactless manner between the roller support and roller or a part which is jointly rotatable with the roller,
**characterised in that**
energy and/or data is/are able to be transmitted inductively **in that** a secondary winding (10) which supplies the electric motor is arranged to be jointly rotatable with the roller, which winding is arranged to be inductively coupled with a primary winding (9) provided in the roller support or
is arranged to be inductively coupled with a primary line arranged on the roller support.

2. A roller drive system according to at least one of the preceding claims,
**characterised in that**
the sensor signals of the sensor are forwarded to an electronic circuit for determining
- the arrival of the load,
- the mass or the weight of the load,
- the speed of the load,
- identification information of the load,
- the width of the load,
- the length of the load,
- the orientation of the load relative to the roller axle,
- or a material property of the load, such as an optical, electrical or magnetic property.

3. A roller drive system according to at least one of the preceding claims,
**characterised in that**
the electronic circuit is arranged to be jointly rotatable with the roller.

4. A roller drive system according to at least one of the preceding claims,
**characterised in that**
the stator or the rotor of the electric motor is arranged to be jointly rotatable with the roller, in particular with an exciter winding being arranged to be jointly rotatable with the roller.

5. A roller drive system according to at least one of the preceding claims,
**characterised in that**
- the sensor is arranged within the roller,
- is arranged integrated in the roller bearing,
- is arranged in the surface of the roller,
- is arranged in a bearing shield of the roller drive.

6. A roller drive system according to at least one of the preceding claims,
**characterised in that**
the electronic circuit is supplied inductively from a winding of the electric motor.

7. A roller drive system according to at least one of the preceding claims,
**characterised in that**
data or the sensor signals can be modulated on the supply voltage for the electric motor and thus are able to be transmitted inductively from the secondary winding to the primary winding.

8. A roller drive system according to at least one of the preceding claims,
**characterised in that**
data or the sensor signals are transmitted in contactless manner as radio signals or as infrared signals.

9. A roller drive system according to at least one of the preceding claims,
**characterised in that**
the data of the sensor or the sensors is routed to an electronic circuit of the roller drive which is connected to a superordinate control means for data exchange.

10. A method for controlling an installation,
wherein the installation comprises a roller track which has a large number of rollers,
wherein a roller drive system according to at least one of the preceding claims comprises at least one of the rollers,
**characterised in that**
the information detected by a sensor (2) or the sensors of the roller support is forwarded to a superordinate control means of the installation, so that a status variable of the installation can be determined from the time characteristic of the values detected by means of the sensor or the sensors,
with energy and/or data being transmitted inductively, with a secondary winding (10) being arranged to be jointly rotatable with the roller, which winding is arranged to be inductively coupled with a primary winding (9) provided in the roller support or is arranged to be inductively coupled with a primary line arranged on the roller support,
the status variable being a physical variable of the load to be conveyed with the roller drive.

11. A method according to Claim 10,
**characterised in that** the status variable relates to
- the presence of goods on the roller track comprising the roller 1,
- the number of transported loads within the plurality of roller drives installation embodied according to the invention [sic],
- the weight loading of the roller track portion comprising the roller 1,
- the spacing of goods on the roller track,
- the speed of rotation of the roller or
- the driving torque or braking torque of the roller 1.

12. A method according to at least one of Claims 10 to 11,
**characterised in that**
a conclusion about the length of the load being conveyed can be drawn from the characteristic of the signals of the force sensor and the speed of rotation of the roller.

13. A method for controlling an installation according to Claim 10,
wherein
the information detected by a sensor or the sensors of the roller drive system and associated with the respective load, in particular the information detected by means of an RFID arranged on the load, is forwarded to a superordinate control means of the installation,
so that the operating time, angular position, driving torque or speed of the roller drive are controlled dependent on the detected information, regulated to their respective desired value or chronological desired-value characteristic, or adjusted.

## Revendications

1. Système d'entraînement de rouleau, comprenant un rouleau (1) monté rotatif sur un support de rouleau (4),
sachant qu'un moteur électrique entraînant le rouleau est entouré par le rouleau de façon à former au moins en partie un boîtier,
sachant qu'au moins un capteur (2) est disposé sur l'entraînement de rouleau,
sachant que de l'énergie et/où des données peuvent être transmises sans contact entre le support de rouleau et le rouleau ou un élément conjointement rotatif avec le rouleau,
**caractérisé en ce que** l'énergie et/ou les données peuvent être transmises par induction, par le fait qu'un bobinage secondaire (10) alimentant le moteur électrique est disposé conjointement rotatif avec le rouleau, bobinage qui est disposé en étant couplé par induction à un bobinage primaire (9) prévu dans le support de rouleau, ou qui est disposé en étant couplé par induction à une ligne primaire disposée sur le support de rouleau.

2. Système d'entraînement de rouleau selon la revendication 1, **caractérisé en ce que** les signaux du capteur sont envoyés à un montage électronique afin de déterminer
- l'arrivée de la charge,
- la masse ou le poids de la charge,
- la vitesse de la charge,
- une information d'identification de la charge,
- la largeur de la charge,
- la longueur de la charge,
- l'orientation de la charge par rapport à l'axe du rouleau,
- ou une propriété du matériau de la charge, telle qu'une propriété optique, électrique ou magnétique.

3. Système d'entraînement de rouleau selon au moins une des revendications précédentes, **caractérisé en ce que** le montage électronique est disposé conjointement rotatif avec le rouleau.

4. Système d'entraînement de rouleau selon au moins une des revendications précédentes, **caractérisé en ce que** le stator ou le rotor du moteur électrique est disposé conjointement rotatif avec le rouleau,
sachant en particulier qu'un bobinage d'excitation est disposé conjointement rotatif avec le rouleau.

5. Système d'entraînement de rouleau selon au moins une des revendications précédentes, **caractérisé en ce que**
- le capteur est disposé à l'intérieur du rouleau,
- est disposé en étant intégré dans le palier de rouleau,
- est disposé dans la surface du rouleau,
- est disposé dans un flasque de l'entraînement de rouleau.

6. Système d'entraînement de rouleau selon au moins une des revendications précédentes, **caractérisé en ce que** le montage électronique est alimenté par induction à partir d'un bobinage du moteur électrique.

7. Système d'entraînement de rouleau selon au moins une des revendications précédentes, **caractérisé en ce que** les données ou les signaux de capteur peuvent être modulés sur la tension d'alimentation pour le moteur électrique et peuvent ainsi être transmis par induction du bobinage secondaire au bobinage primaire.

8. Système d'entraînement de rouleau selon au moins une des revendications précédentes, **caractérisé en ce que** les données ou les signaux de capteur sont transmis sans contact sous la forme de signaux radio ou de signaux infrarouge.

9. Système d'entraînement de rouleau selon au moins une des revendications précédentes, **caractérisé en ce que** les données du capteur ou des capteurs sont transmises à un montage électronique de l'entraînement de rouleau qui est relié pour l'échange de données à une commande principale.

10. Procédé de commande d'une installation,
sachant que l'installation comprend un convoyeur à rouleaux qui présente une pluralité de rouleaux, sachant qu'un système d'entraînement de rouleau selon au moins une des revendications précédentes comprend au moins un des rouleaux,
**caractérisé en ce que** les informations détectées par un capteur (2) ou les capteurs du support de rouleau sont transmises à une commande principale de l'installation, de sorte qu'à partir de l'allure dans le temps des valeurs détectées au moyen du capteur ou des capteurs, on peut déterminer un paramètre d'état de l'installation,
sachant que de l'énergie et/ou des données sont transmises par induction, sachant qu'un bobinage secondaire (10) est disposé conjointement rotatif avec le rouleau, bobinage qui est disposé en étant couplé par induction à un bobinage primaire (9) prévu dans le support de rouleau, ou qui est disposé en étant couplé par induction à une ligne primaire disposée sur le support de rouleau,
sachant que le paramètre d'état est un paramètre physique de la charge à transporter avec l'entraînement de rouleau.

11. Procédé selon la revendication 10, **caractérisé en ce que** le paramètre d'état se réfère à
- la présence de marchandises sur le convoyeur à rouleaux comprenant le rouleau (1),
- le nombre de charges transportées à l'intérieur de l'installation comprenant plusieurs entraînements de rouleau réalisés selon l'invention,
- le poids du chargement de la partie du convoyeur à rouleaux comprenant le rouleau (1),
- l'espacement des marchandises sur le convoyeur à rouleaux,
- la vitesse de rotation du rouleau ou
- le couple d'entraînement ou le couple de freinage du rouleau (1).

12. Procédé selon au moins une des revendications 10 à 11, **caractérisé en ce qu'**à partir de l'allure des signaux du capteur de force et de la vitesse de rotation du rouleau, on peut en conclure la longueur de la charge transportée.

13. Procédé de commande d'une installation selon la revendication 10, sachant que les informations détectées par un capteur ou les capteurs du système d'entraînement de rouleau et associées à la charge respective, en particulier les informations détectées au moyen d'un transpondeur d'identification par radiofréquence (RFID) disposé sur la charge, sont transmises à une commande principale de l'installation,
de sorte que la durée de fonctionnement, la position angulaire, le couple d'entraînement ou la vitesse de rotation de l'entraînement de rouleau sont, en étant commandés en fonction de l'information détectée, réglés ou ajustés à leur valeur de consigne ou allure dans le temps de valeurs de consigne respective.
